Europäisches Patentamt

European Patent Office

Office européen des brevets

(19)

(11) Publication number:

**0 391 872**
**A2**

## (12) EUROPEAN PATENT APPLICATION

(21) Application number: **90850125.7**

(51) Int. Cl.⁵: **C08F 2/00**

(22) Date of filing: **03.04.90**

(30) Priority: **04.04.89 US 333433**
**02.05.89 IL 90164**
**04.10.89 US 417797**

(43) Date of publication of application:
**10.10.90 Bulletin 90/41**

(84) Designated Contracting States:
**AT BE CH DE DK ES FR GB GR IT LI LU NL SE**

(71) Applicant: **CUBITAL LTD.**
**6 Maskit Street**
**Herzlia(IL)**

(72) Inventor: **Levine, Gideon**
**11 Glazer Street**
**IL-Rehovot(IL)**
Inventor: **Pomerantz, Itzchak**
**18 Golomb Street**
**IL-Kfar Saba(IL)**
Inventor: **Herskowits, Floreta**
**16 Shapira Street**
**IL-Petach Tikva(IL)**

(74) Representative: **Halldin, Bo**
**Dr. Ludwig Brann Patentbyra AB P.O. Box 17192**
**S-104 62 Stockholm(SE)**

(54) **Method for controlling shrinkage in solid state polymeric products.**

(57) A method of controlling the shrinkage which occurs in the solid state polymeric product, after a polymerizable liquid which comprises at least one monomer is polymerized to obtain a polymeric solid, comprises carrying out the polymerization in presence of a shrinkage-controlling effective amount of a preferably finely-divided crystalline solid possessing zeolitic sorption properties and which contains available apertures of adequate diameter so as to permit at least one species of participating monomer molecules to enter the apertures, or which had been pre-loaded with at least part of said at least one species in the apertures prior to the polymerization. The method may be applied to an automatically generated computer-designed three-dimensional model, obtained by piecewise assembly and polymerization of a polymerizable liquid. The invention further relates to a polymeric solid composition obtained by the method of the invention, such as e.g. the automatically generated model just mentioned, especially when this has been generated within a removable solid environment which prevents the transient stresses of expansion or shrinkage from causing piece-to-piece distortion. The polymerizable liquid including the crystalline solid also forms part of the invention.

# FIELD OF THE INVENTION

The present invention relates to a method of controlling the shrinkage which occurs in the polymeric solid product, when a polymerizable liquid which comprises at least one monomer is polymerized. The invention moreover relates to a polymerizable liquid and to a polymeric solid composition.

# BACKGROUND OF THE INVENTION

In general, when monomers are polymerized, shrinkage occurs. As has been pointed out in, e.g., "Ring-Opening Polymerization with Expansion in Volume" by William J. Bailey et al, ACS Symposium 59, No. 4, pages 38-59 (1977) (the disclosure of which is incorporated herein by reference), most of the critical shrinkage occurs after the gel point in crosslinked materials, or when the monomer-polymer mixture approaches the glass transition point in linear thermoplastic materials; in the liquid state, the effect of shrinkage can be at least partially compensated by adding further monomer. This publication also notes that it is desirable for many applications in polymer technology, that polymerization should be accompanied by near zero shrinkage or even by expansion. Examples of areas where near zero shrinkage is desirable are: strain-free composites, potting resins, high gloss coatings, binders for solid propellants, impression materials and structural adhesives. Zero shrinkage materials find particular application in R.I.M. (reaction in molding) technology.

In the case of polymeric solid compositions in the form of automatically generated computer-designed three-dimensional models, these should be capable of generation with the utmost precision, whereas shrinkage or expansion are liable to cause distortion and scaling errors. However, expansion may be desirable in such areas as e.g. precision castings, high strength adhesives, prestressed plastics, rock-cracking materials, elastomeric sealants and dental fillings.

One approach to the problem of polymeric shrinkage has been the quest for a monomer type which expands on polymerization, and the problem has been solved by the use of polycyclic ring-opening monomers, which are combined with conventional monomers to produce either zero-shrinkage or a desired degree of expansion (see Bailey et al, loc cit, and U.S. Patent No. 4,387,215 to William J. Bailey, the disclosure of which is incorporated herein by reference). Examples of such ring-opening monomers are those which possess two ring nuclei both of which open during the polymerization reaction to form only one new polymer bond, such as spiroorthocarbonates, e.g. norbornene spiroorthocarbonate, which, however, was priced in March 1988 at $2000 per kilo, and would therefore be uneconomical for many applications. Also, this monomer is utilizable in practice for thermal cure only (whether or not preceded by a UV-precure as in Bluestein's procedure, below).

Bluestein et al, Proceedings of the Rad Tech New Orleans Conference, pages 389-94 (1988) describe a particular application of Bailey's method to produce transparent epoxy coatings in which a small amount of thermally curable expanding monomer is mixed with UV-curable monomer/oligomer, subjected to UV light to obtain a tacky polymer and finally heating e.g. at 110°C for 12-15 hours to produce hard, adherent coatings.

It is also known in the art that shrinkage may be compensated by including carbon fibers, which have a negative thermal expansion coefficient, into the polymerization reaction mixture. However, this method suffers from the disadvantages that carbon fibers are relatively expensive, and that in order to take advantage of the negative thermal expansion, the polymerization mixture must be heated, which, as will be seen, is not necessary in the case of the method of the present invention.

It would clearly be useful to be able to provide a method of controlling solid state polymerization shrinkage which is economical, which may be applied to polymerization processes generally (i.e. not restricted for practical purposes to thermal cure), and which processes may be operated while using injection machinery as known in the art.

In "Porous Crystals" by Barrer, R.M. (in Molecular Sieves ed. Meier W.M. and Uytterhoeven, J.B., Advances in Chemistry Series 121, A.C.S. 1973), the disclosure of which is incorporated herein by reference, the sorption of guest molecules by porous host crystals is classified as (1) zeolitic sorption, in which guest molecules move freely in and out of permanent host crystals, (2) trapping or encapsulation, in which "guests" are introduced at high temperature and pressure after which the crystals are chilled and the pressure is released, and (3) clathration, in which "guests" are incorporated during growth of the host lattice, which is stability-dependent on the "guests" and consequently breaks down when these are expelled. The present invention makes use of substances characterized by zeolitic absorption, i.e. those substances in category (1).

While in category (1) the host structure is permanent, that does not necessarily imply rigidity. Indeed, the host structure lattice will often adjust to a greater or lesser extent when guest molecules are accommodated; in layer structures, such as in certain clay minerals, the guest molecules enter the structure between the layers, which expand to accommodate them.

Barrer (loc cit) further characterizes the host lattices according to the strength of bonding therein. Thus, e.g., they may be strongly bonded in 3 dimensions (inclusive of many zeolites, see Barrer, Table III); or they may be of the layer type (e.g. smectites, modified smectites and kaolinite, see Barrer Table IV); or they may be more strongly bonded in one dimension than in the remaining two and in these the external surfaces are large and are selective sorbents for guest molecules (e.g. fiorous zeolites and clay minerals, see Barrer, Table V). A further category in which host lattices are weakly bonded in all three dimensions is of no interest to the present invention.

The term "apertures" in the present specification and claims means in general apertures, cavities or channels in host lattices which are strongly bonded in three dimensions, as well as inter-layer spaces in layered structures. Even a host lattice which is more strongly bonded in one dimension than in the other two may contain a sufficient number of apertures to be viable in the present context.

The present invention makes use of substances characterized by zeolitic sorption, wherein the guest molecules are monomers which may participate in a desired polymerization reaction. The term "monomers" in the present specification and claims means any "building brick" or unit which is repeated when incorporated in a polymer, regardless of whether or not such "monomer" may itself be considered as partially polymerized in an oligomeric sense. Where relevant in the context, "monomeric" is to be similarly understood. The term "polymerizable liquid" in the present specification and claims means such a liquid which comprises one or more polymerizable monomers and/or one or more polymerizable oligomers. It will be evident that the zeolitic sorptive substances must have available apertures able to accommodate the monomers, so that substances otherwise suitable, but in which the apertures are not in this sense available because of the presence of foreign guest molecules, fall outside the scope of the invention. The zeolitic sorptive substances having available apertures are effectively transformed to a reservoir of sorbed monomers. A skilled person will be able to determine in any particular case, without undue experimentation, whether substances containing some undesirable guest molecules, but in which the apertures are not saturated therewith, are viable with respect to the invention.

## SUMMARY OF THE INVENTION

It is an object of the present invention to provide a method of controlling solid state polymerization shrinkage which is economical, as compared with known methods.

Another object of the present invention is the provision of a method of controlling solid state polymerization shrinkage which may be applied to polymerization processes generally, and which in particular is applicable to photopolymerization processes.

A further object of the invention is to provide liquid monomeric compositions which contain a particular type of additive such that shrinkage of the potential polymeric product may be controlled.

Still a further object of the invention is to provide solid polymeric products including an additive of the type just mentioned. Other objects of the invention will appear from the description which follows.

The present invention thus provides a method of controlling the shrinkage which occurs in the solid state polymerizable product after a polymerizable liquid which comprises at least one monomer is polymerized to obtain a polymeric solid, which method comprises carrying out the polymerization in the presence of a shrinkage-controlling effective amount of a crystalline solid possessing zeolitic sorption properties, said crystalline solid containing available apertures of adequate diameter so as to permit at least one species of participating monomer molecules to enter the apertures.

The present invention also provides a method of controlling the shrinkage which occurs in the solid state polymerizable product after a polymerizable liquid which comprises at least one monomer is polymerized to obtain a polymeric solid, which method comprises carrying out the polymerization in the presence of a shrinkage-controlling effective amount of a crystalline solid possessing zeolitic sorption properties, said crystalline solid containing apertures preloaded with at least one species of participating monomer molecules.

The present invention further provides a method of controlling the shrinkage which occurs when a polymerizable liquid which comprises at least one monomer is polymerized, which method comprises carrying out the polymerization in the presence of a shrinkage-controlling effective amount of a crystalline solid possessing zeolitic sorption properties, the crystalline solid in substantially anhydrous form being preloaded with at least one species of participating monomer molecules and the evolved air being substantially removed before the thus-loaded solid is mixed with the polymerizable liquid prior to effecting the polymerization reaction.

While an important object of the present invention is the control of polymerization shrinkage in the solid state polymer formed in the polymerization reaction, it will be appreciated by persons skilled in the art that once polymerization commences (in the liquid state), monomer molecules present in the apertures of the crystalline solid will start to leave the apertures, or in other words, to be desorbed therefrom. Thus, the mechanism believed to be responsible for countering shrinkage as stated herein will commence to operate in the liquid state polymerization mixture, once polymerization and thus desorption of monomer molecules from the apertures has begun.

The term "participating monomer" refers to a monomer which participates in the polymerization reaction. The crystalline solid characterized by zeolitic sorption may be e.g. a zeolite, but as explained above in the discussion of Barrer's article, is of course not restricted thereto. The expression "in presence of a shrinkage-controlling effective amount of a crystalline solid characterized by zeolitic sorption" in the present context means that the polymerization is carried out in presence of an amount of such solid which produces a desired ultimate degree of solid polymerization shrinkage. Whatever the desired ultimate degree of such shrinkage, this may possibly be achieved only in the relatively long-term, so that it need not be realized initially, necessarily; in many cases the desired effect may not be attained at room temperature until after several days have elapsed, after formation of the solid polymer, but in such cases attainment of the stabilized state may be accelerated by heating, e.g. at $60^\circ$ C for 30 minutes. This phenomenon of long-term effect may be demonstrated, e.g., by plotting against time, from the gel-point onwards, the amount of elongation (positive or negative) of a polymer, in relation to a standard length of polymer at the gel-point, as well as by comparing such data with the amount of elongation which occurs in absence of the crystalline solid utilized according to the present invention. The crystalline solid characterized by zeolitic sorption is preferably utilized in finely-divided form and it may be ionic in character.

For the purposes of definition, it is to be understood that the expression "control of shrinkage" and similar terms are to be understood as including control of expansion (i.e. negative shrinkage) as well as of positive shrinkage, as and when appropriate to the context.

BRIEF DESCRIPTION OF THE DRAWINGS

Fig. 1 illustrates the effect of carrying out a polymerization in presence of varying amounts of the additive utilized in accordance with the invention.

Fig. 2 illustrates the effect of carrying out polymerization of different material, in presence of varying amounts of the additive utilized in accordance with the invention.

Fig. 3 illustrates the comparative effect of carrying out a polymerization in presence of the additive utilized in accordance with the invention.

Fig. 4 further illustrates the comparative effect of carrying out a polymerization in presence of the additive utilized in accordance with the invention.

DETAILED DESCRIPTION OF THE INVENTION

As stated above, there is utilized in accordance with the present invention a shrinkage-controlling effective amount of a crystalline solid characterized by zeolitic sorption which contains available apertures of adequate diameter so as to permit at least one species of participating monomer molecules to enter the apertures.

It is preferred that the crystalline solid is in a finely-divided state. This preference is related to the desirability of the crystalline solid presenting a high surface area in order that as many of the available apertures as possible are exposed to the monomer, and the paths to be crossed by the sorbed substance are as short as possible, so that shrinkage control will be most effective. For example, the preferably finely-divided crystalline solid may comprise more than 90% (desirably substantially 100%) of particles having a diameter below 10 $\mu$m, preferably below 5 $\mu$m. A particle size of below 4 microns, e.g. 3-4 microns or even 1-2 microns is to be preferred. In preparing the polymerization reaction mixture it should be stirred efficiently, in order to prevent the preferably finely-divided particles agglomerating to form larger particles.

While the method of the invention is capable of producing such control of solid polymerization shrinkage, that the shrinkage approaches very close to zero, the invention is not limited to a zero or near zero shrinkage effect. Given the present disclosure, a person skilled in the art could readily achieve, for a particular application, any particular degree of control of shrinkage (or expansion) desired, between a minimum value which is the natural shrinkage of the material and a maximum value which is determined by the viscosity of the polymer/crystalline solid mixture.

The crystalline solid characterized by zeolitic sorption utilized in accordance with the present invention is preferably a zeolite, but by no means necessarily so, as explained above. Bezdadea et al in Materiale Plastice 18 (No. 3):139-140 (1981) have described the photopolymerization of vinyl acetate in presence of a synthetic CaX zeolite as catalyst (in place of a photopolymerization initiator as normally used), at 50$^\circ$ C for 3 hours. The amounts of catalyst were 10%, 2% and 0.2% of the monomer (w/v); a greater degree of polymerization was obtained with progressively smaller amounts of catalyst. This article is not concerned in any way with the solid polymerization shrinkage problem to which the present invention relates.

In general terms, zeolites contain an infinite network of $AlO_2$ and $SiO_2$ tetrahedra linked by the sharing of oxygen atoms, and can be represented by the formula $(z/v)M.[AlO_2]_z.[SiO_2]_y.mH_2O$, where M represents a Group IA or IIA element of valence v and m is the number of water molecules contained in the channels or interconnected voids within the zeolite. Examples of zeolites which may be utilized in accordance with the present invention are CaA, which contains 5 Angstrom pores and has the formula 0.25 $Na_2O$, 0.77 CaO, $Al_2O_3$, 1.89 $SiO_2$; and NaX, which contains 8 Angstrom pores and where in the formula v = 1, y = 2.4, z = 1.95 and m = 6. When the cations were exchanged with tertiary amine derived cations, the utility of these two zeolites for the purposes of the present invention was not adversely affected. A dehydrated zeolite (such as Union Carbide dehydrated zeolite 13X) appears to give best results; a hydrated zeolite may also be dehydrated by (e.g.) heating in a vacuum oven at about 200$^\circ$ C for 4 hours. A completely hydrated zeolite seems to be ineffective, which was to be expected in view of the fact that the present invention requires the apertures to be available and not saturated with other molecules (in this case water). Shrinkage control was also observed to a lesser extent with kaolin and with dehydrated montmorillonite. Kaolin is a clay to which has been assigned the formula $Al_4(Si_4O_{10})(OH)_8$ and which contains additionally small amounts of Ca, Fe(II), Mg and Ti oxides. It is preferable that the crystalline solid characterized by zeolitic sorption is such that it forms a stable suspension with the polymerizable liquid. "Stable" in this context means the absence of any substantial precipitation within a period of 24 hours. It has been found that kaolin and the zeolites are stable in this sense. As will be appreciated by persons skilled in the art, premature precipitation of the crystalline solid characterized by zeolitic sorption will mean that there will be nonuniform control of shrinkage, because of a shrinkage gradient due to different concentrations of finely-divided crystalline solid in different parts of the polymerizable liquid, a situation which will lead to undesired tension and distortion in the solid polymeric product. Utilization of an otherwise suitable crystalline solid characterized by zeolitic sorption as required by the present invention, but which does not form a stable suspension as defined above, may be feasible by addition of a surface-active agent, such as e.g., a polyoxyethylene surfactant.

In a particular embodiment of the invention, the crystalline solid having zeolitic sorptive properties is substantially anhydrous. The use of such an anhydrous additive for control of shrinkage in solid polymers is advantageous since it would be expected to have a greater capacity for holding a monomer species in its apertures than would a partially hydrated such additive. However, there may be a simultaneous disadvantage in that the air released from the pores on mixing the polymerizable liquid with the additive may tend to make the polymer porous which could be undesired for certain applications, e.g. when reproducible accuracy is essential such as in computer designed polymeric bodies. This potential disadvantage can be avoided, however, if in accordance with a particular embodiment of the invention, the substantially anhydrous additive is pre-loaded with at least one monomer species and the evolved air is substantially removed before the thus-loaded additive is mixed with the polymerizable liquid prior to effecting the polymerization reaction. Persons skilled in the art will be able to determine without undue experimentation, whether ambient temperature or an elevated temperature should be used for this pre-loading and degassing step, in any particular case.

Haque E. and Armeniades C.D. in Polymer Engineering and Science 1986, Vol. 26, No. 21, 1524-29, disclose countering shrinkage in polymer concrete systems by addition to the systems of montmorillonite, the water in the latter being released at temperatures above 100$^\circ$ C and giving rise to expansion forces.

More recently, Liu C.-F. and Armeniades C.D. suggested replacing with ammonia, some of the water in the montmorillonite to be used in polymer concrete systems, enabling cure to be effected at lower temperatures. The disclosures in the Armeniades et al papers are distinct from the present invention, since these papers are not addressed to the particular problem of countering solid state expansion in particular, and moreover they do not utilize materials for anti-shrink purposes which are pre-dehydrated so that they contain apertures in which monomer species may enter prior to polymerization or external surfaces on which monomer species may be sorbed prior to polymerization. It is evident that use of dehydrated materials for countering polymerization shrinkage in the solid state would be outside the scope of the Armeniades et al disclosures and would be contrary to the principle of countering shrinkage in polymer concrete systems taught therein.

While the present invention is not to be construed as limited by any theory of operation, it is presently believed that monomeric molecules containing polar functional groups or n-bonds, such as moieties comprising ethylenic bonds, enter the available apertures, and become sorbed therein, thus forming a reservoir of monomers. When polymerization occurs, these moieties would slowly leave the apertures, to form an expanded structure, thus compensating, at least to some extent, for the degree of shrinkage which would otherwise occur. It has been found (contrary to the teachings of Armeniades et al in the field of polymer concrete systems) that if the pores of crystalline solid are filled with water, no expansion of the composite material was observed.

The method of the invention will be applicable to virtually any polymerization process, e.g., where this is effected under the influence of at least one of the following means, namely, heat, light, pressure, catalysis and other chemical means.

The polymerization product may be in the form of a shaped article, such as for example one which is an automatically generated computer-designed three-dimensional model. In this connection, it is to be noted that in a paper by Charles Hull presented to the Spring Management Committee 1988 meeting of the Investment Casting Institute and entitled "Instant 3-D Plastic Models and Patterns", it was stated that "the effects of material shrinkage currently limit the accuracy of the process". It will therefore be appreciated that the control of shrinkage is a matter of urgent need in this particular art, and it is believed that the present invention is capable of meeting this need.

The invention moreover relates to a polymeric solid composition which is characterized by the presence therein of at least a shrinkage-controlling effective amount of a preferably high surface area crystalline solid as recited hereinabove, and to a polymerizable liquid which comprises at least one monomer and which is polymerizable to obtain a polymeric solid, which liquid includes a shrinkage-controlling effective amount of a preferably high surface area crystalline solid as recited hereinabove.

It will be appreciated that while the present invention is highly advantageous in providing a method which is capable of achieving zero shrinkage or near to zero shrinkage in polymeric solids, an effect on the mechanical properties of the latter should be expected. It is believed that a person skilled in the art will have the ability to anticipate and to determine such effect and to strike a balance between the desired properties and the amount of additive to be used, in accordance with the present invention. The fact that the addition of the preferably finely divided crystalline solid in accordance with the invention is likely to affect the optical properties and the sensitivity to humidity of the product would also be factors which the person skilled in the art will be able to take into account, in respect of certain applications. Moreover, the skilled person would be aware that humidity sensitivity in the product can be dealt with in ways known in the art, e.g. by chemical treatment, or by coating with a moisture-impervious substance such as a silicone.

A particular application of the present invention lies in the area of photopolymeric products in the form of automatically generated computer-designed three-dimensional models, since as noted above, these need to be capable of generation with the utmost precision, whereas shrinkage or expansion are liable to cause distortion and scaling errors.

Prior to attainment of the ultimate state in accordance with the present invention, the transient expansion and shrinkage which occur may cause distortion and errors in the case of such three-dimensional models, if polymerization is done piece-wise, i.e. in layers which have to be precisely registered one with another, in a process which usually takes several hours. For example, the fact that a cured layer which shrinks and/or expands before one or more further layers is/are placed thereon, would cause registration errors. Such a system in which a three dimensional object is assembled in layers is described for example in U.S. Patent No. 4,575,330 to Hull, the contents of which are incorporated herein by reference. However, it is a particular feature of the present invention, that if a three dimensional object is constructed by assembly and registration of layers within a solid environment, e.g. as described in detail in U.S. Patent Application Serial No. 290,318,, filed December 22, 1988, (the contents of which are incorporated herein by reference), then the transient stresses of shrinkage and expansion will not cause distortions, and if the object is kept within that solid environment until the ultimate dimensions are achieved, the solid environment can be removed and the object will preserve its dimensions.

Another application of the method of the invention relates to filling gaps between two separated parts. If these are held at the correct relative orientation, and a polymeric composition according to the present invention is used to fill such a gap, then after some initial and temporary swelling of the polymer, the parts will ultimately resume the correct relative orientation. A further application of the invention is the prevention of residual stress on glued parts; the disadvantage of present adhesives and binders for certain applications (e.g. in optics) is well known.

The present invention may be applied to the polymerization of a polymerizable liquid which comprises any monomers or oligomers, whether singly or in combination, where a control of the shrinkage which would otherwise occur in the solid polymeric products, and in which there exists a moiety which can enter the available apertures of the finely divided crystalline solid, as described herein. It is to be understood that in practice any normally gaseous monomers, if utilized, will be in liquid phase, e.g. dissolved in a liquid formulation comprising other monomers. Thus, in general, the monomers may be alkenes such as ethylene, propylene, butylene, isobutylene, 1-pentene, 2-pentene or 1-hexene, alkadienes such as butadiene or isoprene, haloalkenes such as vinyl chloride, vinyl fluoride, vinylidene chloride, vinylidene fluoride or tetrafluoroethylene, unsaturated nitriles such as acrylonitrile or methacrylonitrile, unsaturated esters such as alkyl (e.g. methyl or ethyl) acrylates, alkyl alkacrylates (e.g. methyl or ethyl methacrylates), mono- or polyhydroxy-alkyl, -alkoxyalkyl, -polyalkoxyalkyl and/or poly(oxyalkyl) acrylates and alkacrylates, or vinyl acetate or diallyl phthalate, unsaturated aromatics such as styrene, alphamethylstyrene or 1-vinylpyrene, or unsaturated heterocyclics such as N-vinylpyrrolidone or N-vinylcarbazole. Liquid relatively low molecular weight oligomeric products of any of the foregoing may also be utilized. The possibility of using condensation-reacting monomers such as urethanes, epoxides, polyalkylene glycols and organic carbonates, which may be unmodified, or which may be modified by the presence of ethylenic and especially acrylic moieties, so as to be more readily curable, is also to be considered within the ambit of the present invention. As already implied, the polymeric products may be homopolymers or copolymers (including terpolymers and higher order polymers), and they may be addition or condensation type polymers or mixed addition/condensation type polymers.

The present invention will now be illustrated by the following non-limitative Examples.


EXAMPLE I



General method.


A liquid polymerizable mixture of monomers including oligomer(s) and containing either no additive or the stated percentages of additive (which was thoroughly stirred in to avoid agglomeration), was placed in a rectangular groove 500 mm. long x 20 mm. wide x 0.3 mm. deep, and a metering blade passed over the top surface. The groove contained lateral scratches 0.1 mm. wide x 0.1 mm. deep, and spaced 50 mm. apart. The mixture was exposed to ultraviolet light and when solid, the resultant rectangular strip which contained raised lateral ridges at nominal intervals of 50 mm., was peeled from the mold. In order to check linear shrinkage or expansion, the distance between the ridges which were furthest apart was measured at successive time intervals over a 144 hour period. In general, after an initial expansion peak within the first 24 hours (and in some cases after subsequent lesser expansion peaks), the expansion diminished and in some cases, with ineffective percentages of zeolite, the polymer exhibited ultimate shrinkage; with no zeolite the polymer exhibited shrinkage exclusively. It is to be noted that the results shown in the figures are affected to a minor extent by extraneous factors, and in particular by changes in the temperature and humidity of the environment throughout the time during which these experiments were conducted.

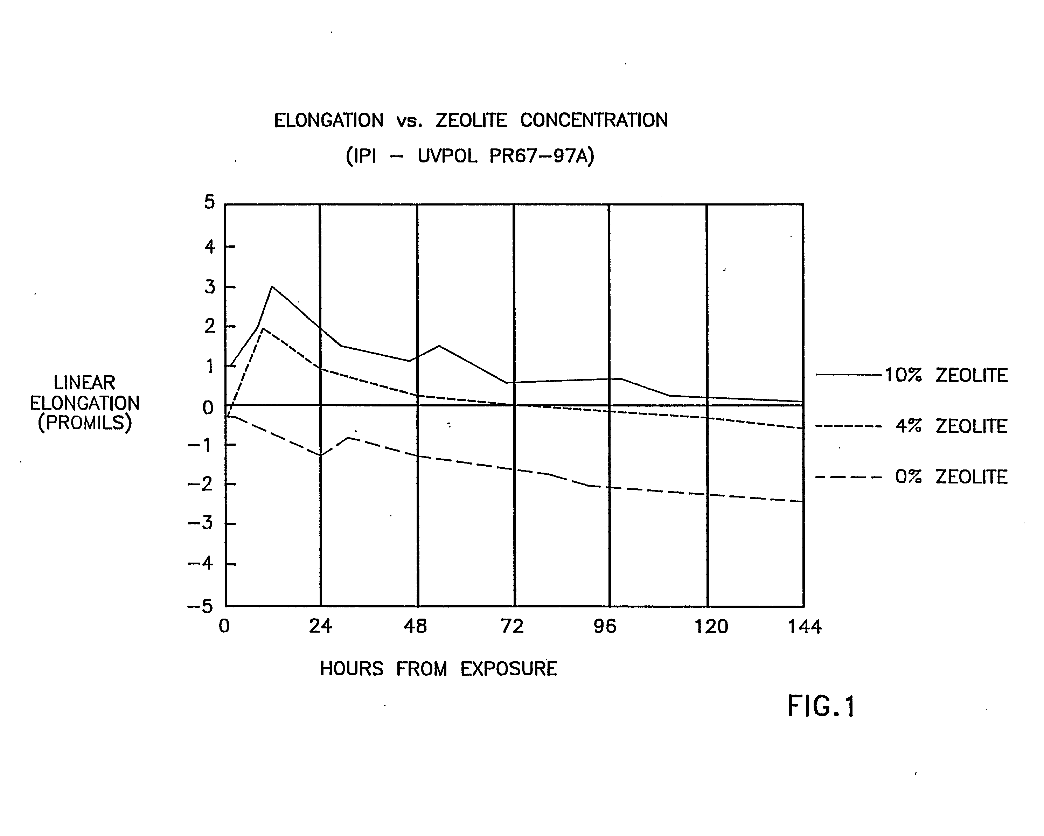

Using the above general method, the following monomer formulation was polymerized: 50 parts GPTA (glycerol propoxy-3-acrylate), marketed by Sartomer, West Chester, Pa.; 50 parts UV-783 (urethane acrylate oligomer) marketed by Morton-Thiokol, Chicago, 111; 15 parts V-Pyrol (N-vinylpyrrolidone) marketed by GAF Chemicals Europe, Esher, Surrey, U.K.; and 2.5 parts Irgacure 651 (benzildimethylketal) marketed by Ciba-Geigy, Bern, Switzerland. The results shown in Fig. 1 were obtained using this monomer formulation containing the stated amounts of dehydrated zeolite 13X (a form of NaX zeolite, Union Carbide) of 3-4 μm. average particle size. It may be noted that use of 4% of zeolite effectively controlled shrinkage of the polymer, compared with 0%, while when using 10% of zeolite, the shrinkage approached zero.

## EXAMPLE II

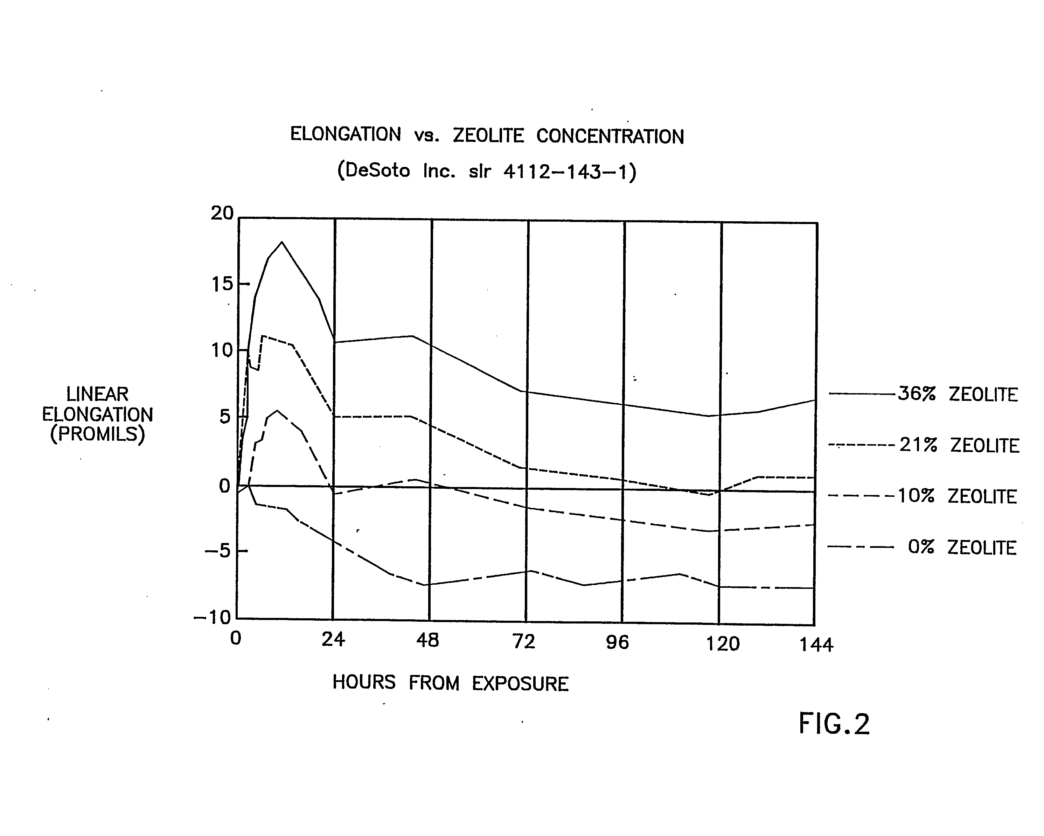

Using the general method stated in Example I, a commercial monomer formulation (Desoto Inc. SLR 4112-143-1) believed to contain acrylic groups, was polymerized. The results shown in Fig. 2 were obtained when this formulation contained the stated amounts of the same zeolite as in Example I. It may be noted that use of 10% of zeolite effectively controlled shrinkage of the polymer, compared with 0%, while when using 21% of zeolite, the shrinkage was close to zero. On the other hand, the use of 36% produced a controlled negative shrinkage, or otherwise stated, a controlled expansion of the polymer. The shrinkage of the polymer when no zeolite was used is also shown in Fig. 2.

## EXAMPLE III

Using the general method stated in Example I, the commercial monomer formulation (DeSoto Inc. SLR 4112-143-1) was polymerized in a dedicated experiment in which each of the tabulated polymeric products was studied under identical conditions, which however were different from those of Examples I and II. The results were as follows, when the stated additives were incorporated:

Table:

| Effect of 10% Additive on Elongation | | |
|---|---|---|
| Additive | Relative Elongation at 1 month (promils) | Deviation from Inert Additive Effect (rounded value, promils) |
| none | -11.25 | -1 |
| alumina* | -10 | 0 |
| kaolin** | -8.75 | 2 |
| zeolite 13X? | -6.25 | 4 |
| zeolite ʳ | -7.5 | 3 |

*Fisher Catalogue #A-591
**"Kaolin Light" marketed by BDH Chemicals, Poole, U.K.
?dehydrated (Union Carbide)
  ʳ zeolite 13X, < 3-4 um. average particle size, not totally dehydrated, marketed by Union Carbide.

It is noted from the Table that shrinkage control effectiveness is in the order zeolite 13X? > zeolite ʳ > kaolin, alumina being ineffective.

## EXAMPLE IV

Experimental method

Discs of the following formulations were UV-cured and the respective liquid densities were measured. Solid state densities were measured as a function of time. In another experiment, 400 micron thick sheets of formulations (i) and (ii) were UV-cured and the densities were measured as a function of time. In these formulations, only (ii) was in accordance with the invention (since it contained adequately sized apertures) whereas (i) and (iii) were included for comparative purposes: (i) 50 parts GPTA, 50 parts UV-783, 2.5 parts Irgacure 651 (benzildimethylketal); (ii) as in (i) with the addition of 10 wt.% dehydrated zeolite 13X; and (iii) as in (i) with the addition of 10 wt.% dehydrated zeolite 4A.

In formulations (ii) and (iii) the ingredients were thoroughly mixed and degassed at about 40° C for at least 4 hours prior to being subjected to cure.

Results

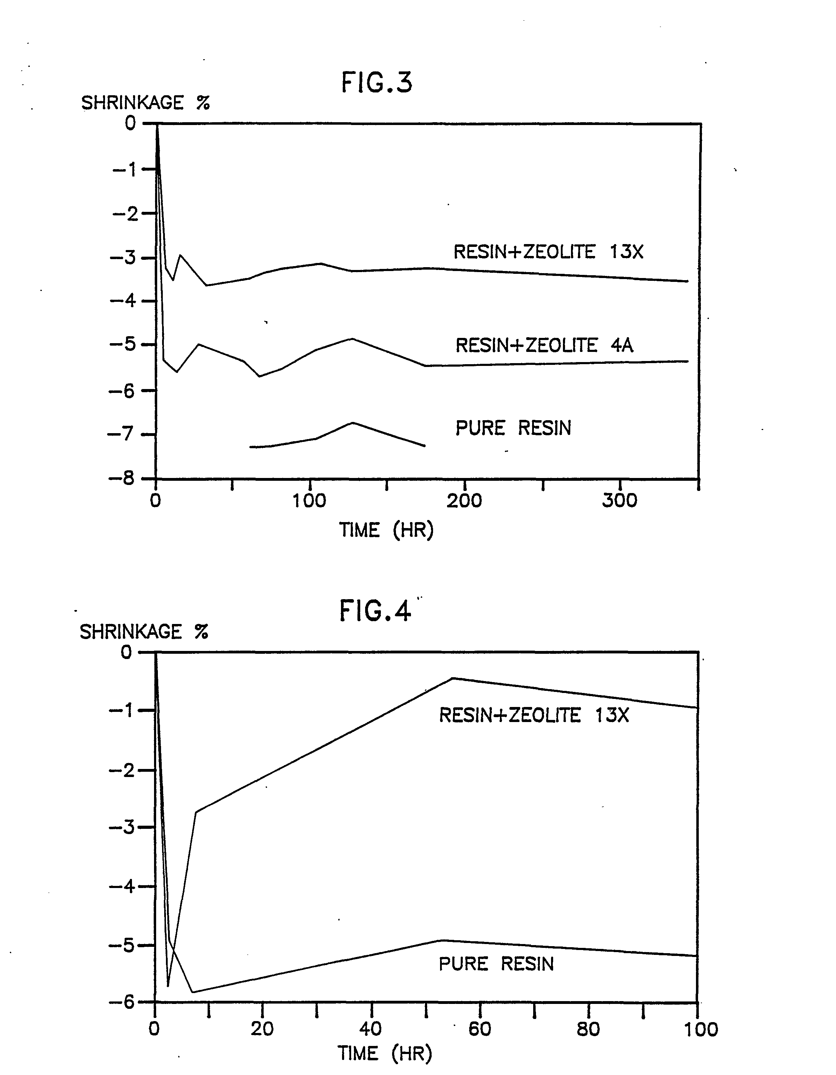

Formulation (i) showed a consistent volume shrinkage tendency which stabilized at about 7% after 172 hours. Formulation (iii) also showed a consistent volume shrinkage tendency which stabilized at about 5.5% after 172 hours, corresponding to the influence of the zeolite 4A in the capacity of an inert filler. Formulation (ii) showed a shrinkage which stabilized in the time scale available at about 1.5%, i.e. there was clearly more shrinkage control than could be accounted for merely by the zeolite 13X functioning as an inert filler (see Fig. 3).

In the second experiment formulation (i) showed a consistent volume shrinkage tendency up to about 5% after 100 hours, whereas formulation (ii) showed an initial expansion followed by shrinkage which stabilized at about 0.84% after 100 hours (see Fig. 4, the initial expansion is not shown).

## EXAMPLE V

For certain applications it may be preferable to pre-load the anti-shrinkage additive in accordance with the invention, with at least one species of monomer and to remove the air from the mixture prior to effecting polymerization. Substantially anhydrous zeolite 13X was mixed with V-Pyrol at ambient temperature. Evolution of air over 3-4 hours was evidence that apertures of the zeolite were being filled with monomer; the mixture was allowed to stand for 24 hours and then heated to observe whether further evolution of air occurred. The zeolite was then separated and immersed in fresh V-Pyrol, but in none of these cases was evolution of air observed after the initial 3-4 hours. GPTA is considerably more viscous than V-Pyrol and its molecular dimensions are greater; in this case heating (e.g. to 50-60°C) was necessary to initiate evolution of air, which continued several hours. After standing for 24 hours, the mixture was heated once more and the zeolite was then immersed in fresh GPTA, but no further evolution of air was observed after the stated initial heating at 50-60°C. The thus-loaded zeolite crystals, in the case of either V-Pyrol or GPTA, could be used in polymerization reactions.

It will of course be evident that a skilled person can readily determine, in similar fashion to the foregoing Examples, the degree of shrinkage control obtainable, when amounts of zeolite other than those specified above are utilized.

While certain embodiments of the invention have been particularly described, it will be appreciated by persons skilled in the art that many variations and modifications may be made. The invention is accordingly not to be construed as limited by such embodiments, rather the scope and spirit of the invention will be ascertained by reference to the claims which follow.

## Claims

1. A method of controlling the shrinkage which occurs in the solid state polymerizable product after a polymerizable liquid which comprises at least one monomer is polymerized to obtain a polymeric solid, which method comprises carrying out the polymerization in the presence of a shrinkage-controlling effective amount of a crystalline solid possessing zeolitic sorption properties, said crystalline solid containing available apertures of adequate diameter so as to permit at least one species of participating monomer molecules to enter the apertures.

2. A method of controlling the shrinkage which occurs in the solid state polymerizable product after a polymerizable liquid which comprises at least one monomer is polymerized to obtain a polymeric solid, which method comprises carrying out the polymerization in the presence of a shrinkage-controlling effective amount of a crystalline solid possessing zeolitic sorption properties, said crystalline solid containing apertures preloaded with at least one species of participating monomer molecules.

3. A method according to claim 1 or claim 2, wherein said crystalline solid comprises more than 90% of particles having a diameter below 10 μm.

4. A method according to claim 3, wherein said crystalline solid comprises more than 90% of particles having a diameter below 5 μm.

5. A method according to claim 3, wherein said crystalline solid comprises substantially 100% of particles having a diameter below 10 μm.

6. A method according to claim 5, wherein said crystalline solid comprises substantially 100% of particles having a diameter below 5 μm.

7. A method according to claim 1 or claim 2, wherein said crystalline solid is such that it forms a stable suspension in said polymerizable liquid without addition of surface active agent.

8. A method according to claim 1 or claim 2, wherein said crystalline solid is such that does not per se form a stable suspension in said polymerizable liquid, and sufficient surface active agent is added whereby a stable suspension of said crystalline solid in said polymerizable liquid is formed.

9. A method according to claim 1 or claim 2, wherein said polymerization is effected under the influence of at least one of the following means, namely, heat, light, pressure, catalysis and other chemical means.

10. A method according to claim 9, wherein said polymerization is effected under the influence of ultraviolet light in presence of a photopolymerization initiator.

11. A method according to claim 1 or claim 2, wherein said polymeric solid is in the form of a shaped article.

12. A method according to claim 11, wherein said shaped article is an automatically generated computer-designed three-dimensional model.

13. A method according to claim 1 or claim 2, wherein the solid-state shrinkage is controlled to approximately zero.

14. A method according to claim 1 or claim 2, wherein the amount of said crystalline solid is within the range of from about 4 to about 36 wt.%, based on the combined weight of said polymerizable liquid and said crystalline solid.

15. A method according to claim 1 or claim 2, wherein the amount of said crystalline solid is within the range of from about 10 to about 21 wt.%, based on the combined weight of said polymerizable liquid and said crystalline solid.

16. A method according to claim 1 or claim 2, wherein said crystalline solid comprises at least one member selected from the group consisting of such crystalline solids which are strongly bonded in three dimensions, such crystalline solids which are of the layer type, and such crystalline solids which are more strongly bonded in one dimension than in the other two dimensions.

17. A method of controlling the shrinkage which occurs when a polymerizable liquid which comprises at least one monomer is polymerized to obtain a polymeric solid, which method comprises carrying out the polymerization in the presence of a shrinkage-controlling effective amount of a crystalline solid possessing zeolitic sorption properties, said crystalline solid in substantially anhydrous form being pre-loaded with said at least one species and the evolved air being substantially removed before the thus-loaded solid is mixed with the polymerizable liquid prior to effecting the polymerization reaction.

18. A method of controlling the solid-state shrinkage which occurs in an automatically generated computer-designed three-dimensional model, obtained by piecewise assembly and polymerization of a polymerizable liquid, which comprises at least one monomer, which method comprises carrying out the polymerization in presence of a shrinkage-controlling effective amount of a crystalline solid possessing zeolitic sorption properties and which contains available apertures of adequate diameter so as to permit at least one species of participating monomer molecules to enter the apertures.

19. A method according to claim 18, wherein said crystalline solid is in finely-divided form.

20. A method according to claim 19, wherein said crystalline solid comprises more than 90% of particles having a diameter below 10 µm.

21. A method according to claim 20, wherein said crystalline solid comprises more than 90% of particles having a diameter below 5 µm.

22. A method according to claim 20, wherein said crystalline solid comprises substantially 100% of particles having a diameter below 10 µm.

23. A method according to claim 22, wherein said crystalline solid comprises substantially 100% of particles having a diameter below 5 µm.

24. A method according to claim 18, wherein said crystalline solid is such that it forms a stable suspension in said polymerizable liquid without addition of surface active agent.

25. A method according to claim 18, wherein said crystalline solid is such that does not per se form a stable suspension in said polymerizable liquid, and sufficient surface active agent is added whereby a stable suspension of said crystalline solid in said polymerizable liquid is formed.

26. A method according to claim 18, wherein said polymerization is effected under the influence of at least one of the following means, namely, heat, light, pressure, catalysis and other chemical means.

27. A method according to claim 26, wherein said polymerization is effected under the influence of ultraviolet light in presence of a photopolymerization initiator.

28. A method according to claim 18, wherein the solid-state shrinkage is controlled to approximately zero.

29. A method according to claim 18, wherein the amount of said crystalline solid is within the range of from about 4 to about 36 wt.%, based on the combined weight of said polymerizable liquid and said crystalline solid.

30. A method according to claim 29, wherein the amount of said crystalline solid is within the range of from about 10 to about 21 wt.%, based on the combined weight of said polymerizable liquid and said crystalline solid.

31. A method according to claim 18, wherein said crystalline solid comprises at least one member selected from the group consisting of such crystalline solids which are strongly bonded in three dimensions, such crystalline solids which are of the layer type, and such crystalline solids which are more strongly bonded in one dimension than in the other two dimensions.

32. A method according to claim 18, wherein said model is generated within a removable solid environment which prevents the transient stresses of expansion or shrinkage from causing piece-to-piece distortion.

33. A method according to claim 18, wherein said crystalline solid in a substantially anhydrous form is pre-loaded with said at least one species and the evolved air is substantially removed before the thus-loaded solid is mixed with the polymerizable liquid prior to effecting the polymerization reaction.

34. A polymeric solid composition which is characterized by the presence therein of a solid-state shrinkage-controlling effective amount of a crystalline solid possessing zeolitic sorption properties and which at the time of initiating the polymerization reaction by which at least part of the polymer content of said composition was prepared from a polymerizable liquid, contained available apertures of adequate diameter so as to permit at least one species of participating monomer molecules to enter the apertures.

35. A composition according to claim 34, wherein said crystalline solid is in finely-divided form.

36. A composition according to claim 35, wherein said crystalline solid comprises more than 90% of particles having a diameter below 10 $\mu$m.

37. A composition according to claim 36, wherein said crystalline solid comprises more than 90% of particles having a diameter below 5 $\mu$m.

38. A composition according to claim 36, wherein said crystalline solid comprises substantially 100% of particles having a diameter below 10 $\mu$m.

39. A composition according to claim 38, wherein said crystalline solid comprises substantially 100% of particles having a diameter below 5 $\mu$m.

40. A composition according to claim 34, wherein said crystalline solid is such that it forms a stable suspension in said polymerizable liquid without addition of surface active agent.

41. A composition according to claim 34, wherein said crystalline solid is such that does not per se form a stable suspension in said polymerizable liquid, and sufficient surface active agent was added whereby a stable suspension of said crystalline solid in said polymerizable liquid was formed.

42. A composition according to claim 34, wherein said polymerization was effected under the influence of at least one of the following means, namely, heat, light, pressure, catalysis and other chemical means.

43. A composition according to claim 42, wherein said polymerization was effected under the influence of ultraviolet light in presence of a photopolymerization initiator.

44. A composition according to claim 34, which is in the form of a shaped article.

45. A composition according to claim 44, wherein said shaped article is an automatically generated computer-designed three-dimensional model.

46. A composition according to claim 34, wherein the solid-state shrinkage is controlled to approximately zero.

47. A composition according to claim 34, wherein the amount of said crystalline solid is within the range of from about 4 to about 36 wt.%, based on the combined weight of said polymerizable liquid and said crystalline solid.

48. A composition according to claim 47, wherein the amount of said crystalline solid is within the range of from about 10 to about 21 wt.%, based on the combined weight of said polymerizable liquid and said crystalline solid.

49. A composition according to claim 34, wherein said crystalline solid comprises at least one member selected from the group consisting of such crystalline solids which are strongly bonded in three dimensions, such crystalline solids which are of the layer type, and such crystalline solids which are more strongly bonded in one dimension than in the other two dimensions.

50. A composition according to claim 45, wherein said model has been obtained by piecewise assembly and polymerization of the polymerizable liquid.

51. A composition according to claim 50, wherein said model has been generated within a removable solid environment which prevents the transient stresses of expansion or shrinkage from causing piece-to-piece distortion.

52. A polymeric solid composition which is characterized by the presence therein of a solid-state shrinkage-controlling effective amount of a crystalline solid possessing zeolitic sorption properties and which at the time of initiating the polymerization reaction by which at least part of the polymer content of said composition was prepared from a polymerizable liquid said crystalline solid had been pre-loaded with at least part of said at least one species in the apertures prior to said reaction.

53. A polymerizable liquid which comprises at least one monomer and which is polymerizable to obtain a polymeric solid, which liquid includes admixed therewith a solid-state shrinkage-controlling effective amount of a crystalline solid possessing zeolitic sorption properties and which contains available apertures of adequate diameter so as to permit at least one species of said monomer molecules to enter the apertures, or said crystalline solid had been pre-loaded with at least part of said at least one species in the apertures prior to said reaction.

54. A polymerizable liquid according to claim 53, wherein said crystalline solid is in finely-divided form.

55. A polymerizable liquid according to claim 54, wherein said crystalline solid comprises more than 90% of particles having a diameter below 10 $\mu$m.

56. A polymerizable liquid according to claim 55, wherein said crystalline solid comprises more than 90% of particles having a diameter below 5 $\mu$m.

57. A polymerizable liquid according to claim 55, wherein said crystalline solid comprises substantially 100% of particles having a diameter below 10 $\mu$m.

58. A polymerizable liquid according to claim 57, wherein said crystalline solid comprises substantially 100% of particles having a diameter below 5 $\mu$m.

59. A polymerizable liquid according to claim 53, wherein said crystalline solid is such that it forms a stable suspension in said polymerizable liquid without addition of surface active agent.

60. A polymerizable liquid according to claim 53, wherein said crystalline solid is such that does not per se form a stable suspension in said polymerizable liquid, and sufficient surface active agent is added whereby a stable suspension of said crystalline solid in said polymerizable liquid is formed.

61. A polymerizable liquid according to claim 53, wherein the amount of said crystalline solid is within the range of from about 4 to about 36 wt.%, based on the combined weight of said polymerizable liquid and said crystalline solid.

62. A polymerizable liquid according to claim 61, wherein the amount of said crystalline solid is within the range of from about 10 to about 21 wt.%, based on the combined weight of said polymerizable liquid and said crystalline solid.

63. A polymerizable liquid according to claim 53, wherein said crystalline solid comprises at least one member selected from the group consisting of such crystalline solids which are strongly bonded in three dimensions, such crystalline solids which are of the layer type, and such crystalline solids which are more strongly bonded in one dimension than in the other two dimensions.

64. A polymerizable liquid according to claim 53, which includes at least one additional component selected from the group consisting of photopolymerization initiators and surface active agents.

65. A crystalline solid possessing zeolitic sorption properties and being pre-loaded with monomer molecules in apertures defined therein.

ELONGATION vs. ZEOLITE CONCENTRATION

(IPI — UVPOL PR67–97A)

LINEAR
ELONGATION
(PROMILS)

HOURS FROM EXPOSURE

——— 10% ZEOLITE

– – – 4% ZEOLITE

— — — 0% ZEOLITE

FIG.1

EP 0 391 872 A2

ELONGATION vs. ZEOLITE CONCENTRATION

(DeSoto Inc. slr 4112-143-1)

LINEAR ELONGATION (PROMILS)

HOURS FROM EXPOSURE

36% ZEOLITE

21% ZEOLITE

10% ZEOLITE

0% ZEOLITE

EP 0 391 872 A2

FIG.2

FIG.3

FIG.4